# EUROPEAN PATENT SPECIFICATION

(11) **EP 1 428 207 B1**
(45) Date of publication and mention of the grant of the patent: **24.10.2007**
(21) Application number: 02761756.2
(22) Date of filing: 19.09.2002
(51) Int. Cl.: G10L 21/02

(54) **ACTIVE NOISE FILTERING FOR VOICE COMMUNICATION SYSTEMS**
AKTIVE GERÄUSCHFILTERUNG FÜR SPRACHÜBERTRAGUNGSSYSTEME
FILTRAGE ACTIF DE BRUIT DESTINE A UN SYSTEME DE COMMUNICATION VOCALE

(30) Priority: 20.09.2001 US 324035 P
(43) Date of publication of application: 16.06.2004
(73) Proprietor: Honeywell, Inc., Morristown, NJ 07962-9806 (US)
(72) Inventor: GOLDBERG, Mark, L., Peoria, AZ 85381 (US); SNODGRASS, Ken, L., Peoria, AZ 85383 (US)
(74) Representative: Haley, Stephen
(86) International application number: PCT/US2002/029908
(87) International publication number: WO 2003/025905

(56) References cited:
- EP-A- 0 727 769
- WO-A-01/73761
- DE-A- 3 230 391
- PUDER H. ET AL: 'Improved noise reduction for hands-free car phones utilizing information on vehicle and engine speeds' SIGNAL PROCESSING : THEORIES AND APPLICATIONS, PROCEEDINGS OF EUSIPCO vol. 3, 04 September 2000, pages 1851 - 1854, XP009030255

## Description

### BACKGROUND OF THE INVENTION

### TECHNICAL FIELD

The present invention relates generally to the field of speech signal processing and more particularly to a noise filtering system for use in a communications system.

### BACKGROUND ART

In certain types of vehicles, such as submarines and aircraft, clear communications between the members of the crew is considered desirable for proper operation of the vehicle. In many onboard voice communication systems, the communications between various crewmembers is typically accomplished through the use of an onboard electronic intercom system. The typical onboard electronic intercom system will generally include headphones and microphones and will allow for communications between the primary vehicle operators as well as crewmembers located in other parts of the vehicle.

In operation, the typical microphone receives both voice signals and various "noise" signals. Noise signals can be generally characterized as undesired audio signals that tend to mask or distort the desired audio signals. In general, noise may be introduced into the communication system by various sources including the ambient operational environment of the vehicle, sources external to the vehicle, and by the operational components of the communication system itself. Regardless of the source, noise is generally manifest as spurious audio signals in the voice communication system. Accordingly, users of the electronic communications system will hear both the desired voice signal and, in many intercom-type communication systems, various noise signals.

As can be appreciated, the introduction of noise into the communications system is considered undesirable. Noise tends to inhibit clear communications and may cause miscommunication of important information that could be detrimental to the desired operation of the vehicle. Additionally, noise mixed with the speech signal tends to mask or distort the speech signal and, in certain situations, may render the voice signal entirely unintelligible. Finally, the continued exposure to noise in the communications system can cause unnecessary strain on the crew as they try to decipher the voice signal, thereby increasing operator fatigue.

In an effort to mitigate the undesirable effects of noise in the communications system, some conventional intercom communication systems have adopted a compression scheme in order to reduce the noise introduced by the communications system itself. In a typical compressed signal system, mixed noise and voice signals are compressed at the transmitting end and then expanded at the receiving end of the system. These systems are typically implemented to reduce only the noise introduced in the transmission channel of the communication system itself, between the microphone and the headphone. Accordingly, any ambient acoustic noise picked up by the microphone tends to remain unchanged in these systems.

Other types of communication systems attempt to cancel noise by measuring the ambient noise in the vicinity of the microphone. Then, various filters may be employed to subtract the "measured" noise from the combined voice and noise signal. While somewhat effective, these systems generally require two microphones, the first microphone being used to pick up the combined voice and noise signal while the second microphone attempts to pick up only the ambient noise. The requirement for a second microphone adds cost and complexity to the intercom system and may not substantially enhance performance because the ambient noise in the vicinity of the second microphone may not accurately represent the ambient noise in the vicinity of the first microphone.

In view of the foregoing, it should be appreciated that it would be desirable to provide methods and apparatus for minimizing the undesirable noise in a vehicle's communication system without substantially increasing the cost and complexity of the communication system. Furthermore, additional desirable features will become apparent to one skilled in the art from the foregoing background of the invention and following detailed description of a preferred exemplary embodiment and appended claims.

"Puder H et al improves noise reduction for hands-free car phones utilising information on vehicle and engine speeds" proceedings of the 10th European Signal Processing Conference 4-8th September 2000, pages 1851 to 1854, discloses a noise filtering apparatus with processor and at least one filter.

The present invention provides a noise filtering apparatus as set forth in claim 1 and a noise filtering method as set forth in claim 10. Preferred embodiments are set forth in the dependent claims.

The preferred exemplary, embodiment of the present invention will hereinafter be described in conjunction with the appended drawings, where like designations denote like elements, and
FIG. 1 is a schematic block diagram of an apparatus for filtering vehicle noise sources in accordance with a preferred exemplary embodiment of the present invention;
FIG. 2 is a frequency diagram of a voice signal and various noise signals; and
FIG. 3 is a flow diagram for filtering vehicle noise sources in accordance with a preferred exemplary embodiment of the present invention.

In the most preferred embodiments of the present invention, a series of digital filters are "tuned" to the frequency of the ambient noises of the vehicle environment and can be adjusted as the ambient noise changes.

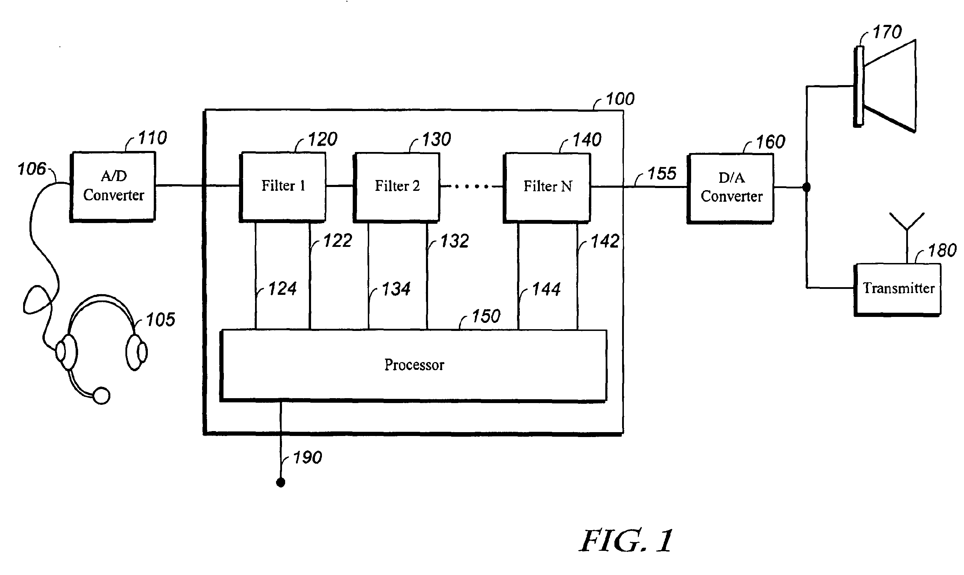

Referring now to FIG. 1, a noise filtering apparatus 100 comprises a plurality of digital filters 120, 130 and 140, and a processor 150. Processor 150 is configured to receive at least one operating parameter associated with the operation of the vehicle containing noise filtering apparatus 100 via operating parameter input 190. An operating parameter may be any type of information relative to the operation of the vehicle containing noise-filtering apparatus 100. This would include information about the operational environment as well as the various devices used in conjunction with the operation of the vehicle.

Digital filters 120, 130 and 140 are each configured to receive and process an audio signal 106 received from an audio source 105. Each digital filter 120, 130 and 140 is connected to processor 150 and is configured with a center frequency input 122, 132, and 142 respectively. Additionally, each digital filter 120, 130 and 140 is configured with a filter bandwidth input 124, 134, or 144 respectively. Processor 150 can selectively adjust the center frequency of each of digital filters 120, 130, and 140. Similarly, processor 150 can selectively adjust the bandwidth for each digital filter 120, 130, and 140. This ability to adjust filters 120, 130, and 140 allows for the deployment of a relatively robust and flexible noise filtering apparatus 100.

Additionally, as shown in FIG. 1, an audio source 105 is coupled to noise filtering apparatus 100 and provides an audio signal 106 via an analog to digital (A/D) converter 110. Similarly, a digital to analog (D/A) converter 160 is coupled to an output signal connector 155 and is provided to convert the digital output signal from noise filtering apparatus 100 to an analog signal, suitable for use with loudspeaker 170 and/or transmitter 180. Other types of output devices, including other headsets or additional signal processing devices, may be employed in various other embodiments of the present invention as well.

Processor 150 is most preferably configurable to adaptively respond to variations in the noise frequencies associated with the operation of the vehicle. By using operating parameter input 190, information relative to the operating environment of the vehicle can be used to adjust the center frequency for filters 120, 130 and 140. For example, as the revolutions-per-minute (RPM) of a helicopter rotor increase or decrease, the center frequencies of the noise signal associated with the rotor tend to shift. If the information relative to the helicopter rotor RPM is transmitted to processor 150 via operating parameter input 190, then processor 150 can selectively adjust the center frequency of one or more of filters 120, 130 and/or 140 to adaptively reconfigure filters 120, 130, and/or 140, thereby more effectively filtering the helicopter rotor noise signal over a broader operating range.

Additionally, the bandwidth of each of filters 120, 130 and 140 may be selectively adjusted by processor 150, based on the operating environment as determined in conjunction with input received from operating parameter input 190. For certain noise sources, the bandwidth of a given filter 120, 130 or 140 may be narrowed while it may be desirable to broaden the bandwidth of another filter to reduce or eliminate the noise associated with a different noise source. In general, to preserve the integrity of the voice signal to the extent possible, the bandwidth of filters 120, 130 and 140 will be kept as narrow as practical for a given noise source. This reconfiguration capability thereby allows noise-filtering apparatus 100 to be configured for a variety of noise frequencies without requiring a separate noise filter for each possible noise source or multiple filters for a single noise source with a changing center frequency. In the most preferred embodiments of the present invention, the audio signal is filtered prior to compression and/or transmission to any output device such as loudspeaker 170 and/or transmitter 180. This means that in the most preferred embodiments of the present invention, signal filtering is performed on the input side of noise filtering apparatus 100.

While the most preferred embodiments of the present invention use a series of filters that are adaptively reconfigurable by processor 150, other embodiments may rely on a series of non-reconfigurable filters specifically tuned to filter one or more pre-determined noise sources, at a pre-determined frequency and/or bandwidth. In those embodiments, processor 150 would simply select one or more filters from the population of available filters, depending on the noise source and the operational environment of the vehicle as determined in conjunction with input received from operating parameter input 190.

In this particular exemplary embodiment, audio source 105 is depicted as the boom microphone of a standard aviator's headset, typical of the type used by a pilot or crewmember in an aircraft. However, it should be noted that this depiction is merely representative in nature and other audio sources may be configured for use with the present invention as well. Additionally, in certain applications, it is anticipated that audio signal 106 may be a digital signal, obviating the need for A/D converter 110. Similarly, the signal provided at output signal connector 155 may not need to be converted to an analog signal in certain applications. Finally, those skilled in the art will recognize that the conversion of an input or an output signal may be accomplished by many means and all such conversions, if required, are considered to be within the scope of the present invention.

It should also be noted that although the number of digital filters depicted in FIG. 1 is three, the exact number of digital filters used in noise filtering apparatus 100 is largely a design consideration and will be determined by the specific application, based on parameters such as the number and type of noise sources. Similarly, although a single operating parameter input 190 is shown, those skilled in the art will recognize that, if necessary or desired for a specific application, additional operating parameter inputs may be included in noise filtering apparatus 100 without departing from the scope of the present invention.

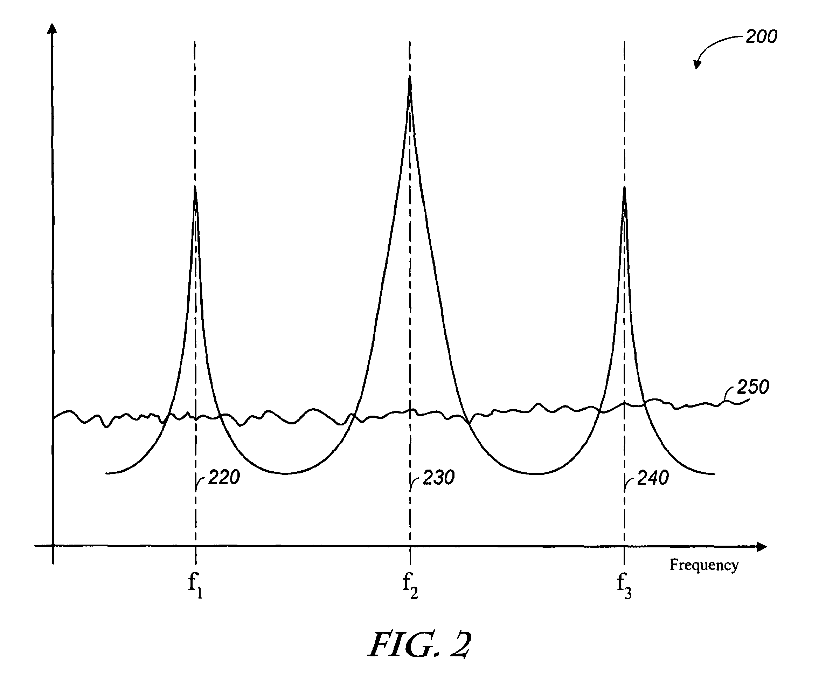

Referring now to FIG. 2, a frequency diagram 200 for a voice signal 250 combined with a plurality of noise frequencies (f₁, f₂, and f₃) with each frequency having a center frequency 220, 230 or 240. Frequency diagram 200 illustrates the interaction of the noise signals with voice signal 250 and each noise frequency shown in FIG. 2 can be attributed to a specific noise source associated with the operational environment of a vehicle such as an airplane or helicopter. Voice signal 250 can contain noise attributable to the operation of the vehicle and, as shown in FIG. 2, the noise frequencies will generally be identifiable within multiple frequency bands. As shown in FIG. 2, each typical noise frequency has a relatively narrow bandwidth. Accordingly, these frequencies can be identified/characterized and a filter can be appropriately configured with a suitable bandwidth to mask the noise signal at that specific frequency.

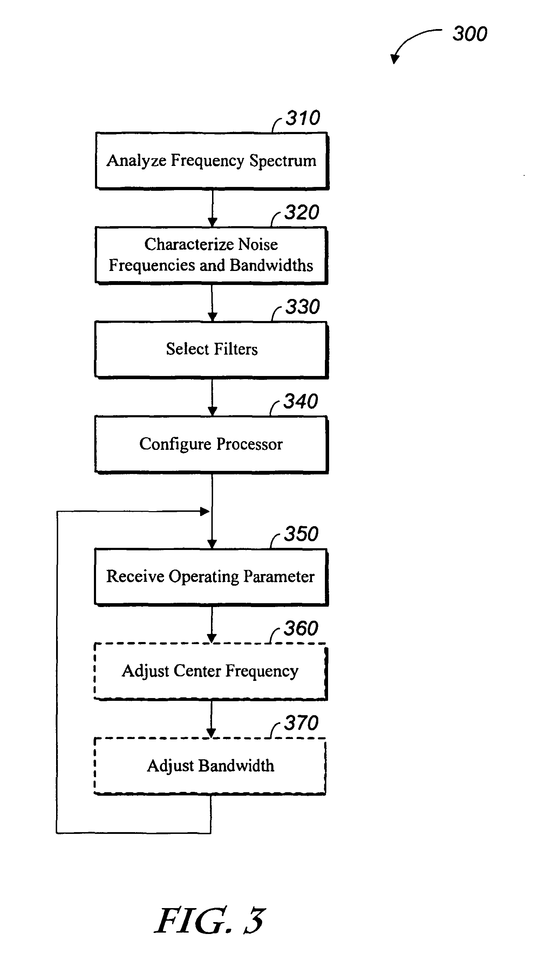

Referring now to FIG. 3, a method 300 for implementing a noise filtering apparatus in accordance with a preferred exemplary embodiment of the present invention is shown. As shown in FIG. 3, a frequency spectrum analysis of a given vehicle is conducted (step 310) to identify various noise sources and related noise frequencies associated with the operating environment of the vehicle. This analysis will also characterize the noise frequencies and the associated bandwidths of these frequencies for the various operating modes of the vehicle (step 320). The noise sources may include things such as electrical devices, machinery, mechanical sub-systems and the like.

Next, appropriate filters for the identified frequencies will be selected (step 330). These filters will be specifically configurable for the noise frequencies identified in the spectrum analysis and characterization steps of method 300. After the filters have been selected, the processor that will control the filters will be configured with information about each of the filters, including identifying an initial center frequency input and a filter bandwidth input for each of the filters. This will allow the processor to control the bandwidth of each filter and selectively activate or deactivate the appropriate filter or filters, depending on the specific noise frequency as determined by the operating parameter or parameters.

Finally, in typical operation, the processor will receive at least one operating parameter (step 350) and will adjust the center frequency of at least one of the filters to reduce or eliminate the noise signal associated with that operating parameter (step 360) or adjust the bandwidth (step 370) of one or more filters, if necessary. Steps 360 and 370 are optional steps that will be used as necessary, depending on the type of noise signal being filtered and the type of filtering being performed. The center frequency adjustment will allow various noises to be filtered based on changes in the operating environment and changes in the bandwidth will allow for the specific filtering of isolated noises, as desired. It should be noted that steps 350, 360 and/or 370 may be repeated for any number of operating parameters and/or for any number of changes in any given operating parameter or parameters. In this manner, it is possible to configure the noise filtering apparatus for a multitude of different noise signals generated by a number of different operating environments.

From the foregoing description, it should be appreciated that methods and apparatus are provided for a vehicle noise filtering system. While certain preferred exemplary embodiments have been presented in the foregoing detailed description of the preferred exemplary embodiments, it should be appreciated that a vast number of variations in the embodiments exist. For example, although the various preferred exemplary embodiments of the present invention have been described in the context of a communications system for an aircraft, the apparatus and methods of the present invention are equally applicable to communication systems in other vehicles such as submarines, spacecraft, and the like.

It should also be appreciated that the preferred exemplary embodiments are only examples, and are not intended to limit the scope, applicability, or configuration of the invention in any way. Rather, the foregoing detailed description provides those skilled in the art with a convenient road map for implementing the preferred exemplary embodiments of the invention. It should also be understood that various changes may be made in the function and arrangement of elements described in the preferred exemplary embodiments without departing from the scope of the invention as set forth in the appended claims.

## Claims

1. A noise filtering apparatus (100) comprising:
a plurality of filters (120, 130, 140) each filter having an adjustable center frequency and bandwidth, and configurable to receive an audio signal and attenuate therefrom particular signal frequencies attributed to at least one noise source; and
a processor (150), the processor being coupled to the filters and having an input (190) configured to receive at least one operating parameter, associated with the at least one noise source, the processor being configured to selectively activate and deactivate appropriate filters according to an identified noise frequency and, in response to the operating parameter, to adjust the center frequency and the bandwidth for each of the filters.

2. The noise filtering apparatus (100) of claim 1, further comprising an audio source (105) coupled to said noise filtering apparatus, said audio source being configured to transmit the audio signal to said noise filtering apparatus.

3. The noise filtering apparatus (100) of claim 2, wherein said audio source (105) comprises a microphone.

4. The noise filtering apparatus (100) of claim 1 or 2, further comprising an output device (170, 180) coupled to said noise filtering apparatus, said output device being configured to transmit a filtered signal received from said noise filtering apparatus.

5. The noise filtering apparatus (100) of claim 2, wherein said output device (170, 180) comprises a loudspeaker (170).

6. The noise filtering apparatus (100) of claim 2, wherein said output device (170, 180) comprises a transmitter (180).

7. The noise filtering apparatus (100) of claim 2, further comprising an analog-to-digital converter (110) coupled between said audio source (105) and said noise filtering apparatus, said analog-to-digital converter being configured to convert an analog signal to a digital signal.

8. The noise filtering apparatus (100) of claim 4, further comprising a digital-to-analog converter (160) coupled between said noise filtering apparatus and said output device (170, 180), said digital-to-analog converter being configured to convert a digital signal to an analog signal.

9. The noise filtering apparatus (100) of claim 1, wherein said at least one operating parameter comprises a plurality of operating parameters.

10. A noise filtering method comprising the steps of:
analyzing (310) a frequency spectrum of an audio signal to identify at least one noise source;
selecting (330) at least one filter (120, 130, 140) from a plurality of filters based on a frequency associated with said at least one noise source;
configuring (340) a processor (150) to adaptively configure said at least one filter; supplying (350) said processor with at least one operating parameter; and
configuring (360, 370) said at least one filter based on said at least one operating parameter.

11. The noise filtering method of claim 10, wherein said step of selecting at least one filter (120, 130, 140) comprises the step of selecting a plurality of filters.

12. The noise filtering method of claim 11, wherein said step of configuring at least one filter (120, 130, 140) based on said at least one operating parameter comprises the step of configuring a plurality of filters based on said at least one operating parameter.

13. The noise filtering method of claim 10, further comprising the step of using said at least one filter (120, 130, 140) to filter the audio signal.

14. The noise filtering method of claim 13, further comprising the step of transmitting said audio signal to an output device (170, 180) after filtering said audio signal.

15. The noise filtering method of claim 13, wherein said output device (170, 180) comprises a loudspeaker (170).

16. The noise filtering method of claim 13, further comprising the step of transmitting the audio signal from an audio source (105) to said at least one filter (120, 130, 140).

17. The noise filtering method of claim 16, wherein said audio source (105) is a microphone.

## Patentansprüche

1. Geräuschfiltervorrichtung (100), umfassend:
mehrere Filter (120, 130, 140), wobei jedes Filter eine einstellbare Mittenfrequenz und Bandbreite aufweist, und die dafür konfiguriert sind, ein Audiosignal zu empfangen und von diesem bestimmte Signalfrequenzen zu dämpfen, die mindestens einer Geräuschquelle zugeschrieben werden; und
einen Prozessor (150), wobei der Prozessor an die Filter angekoppelt ist und einen Eingang (190) aufweist, der dafür konfiguriert ist, mindestens einen Betriebsparameter zu empfangen, der mit der mindestens einen Geräuschquelle assoziiert ist, wobei der Prozessor dafür konfiguriert ist, als Reaktion auf den Betriebsparameter selektiv entsprechende Filter gemäß einer identifizierten Geräuschfrequenz zu aktivieren und zu deaktivieren und die Mittenfrequenz und die Bandbreite für jedes der Filter einzustellen.

2. Geräuschfiltervorrichtung (100) nach Anspruch 1, ferner mit einer an die Geräuschfiltervorrichtung angekoppelten Audioquelle (105), wobei die Audioquelle dafür konfiguriert ist, das Audiosignal zu der Geräuschfiltervorrichtung zu senden.

3. Geräuschfiltervorrichtung (100) nach Anspruch 2, wobei die Audioquelle (105) ein Mikrofon umfaßt.

4. Geräuschfiltervorrichtung (100) nach Anspruch 1 oder 2, ferner mit einer an die Geräuschfiltervorrichtung angekoppelten Ausgabeeinrichtung (170, 180), wobei die Ausgabeeinrichtung dafür konfiguriert ist, ein aus der Geräuschfiltervorrichtung empfangenes gefiltertes Signal zu senden.

5. Geräuschfiltervorrichtung (100) nach Anspruch 2, wobei die Ausgabeeinrichtung (170, 180) einen Lautsprecher (170) umfaßt.

6. Geräuschfiltervorrichtung (100) nach Anspruch 2, wobei die Ausgabeeinrichtung (170, 180) einen Sender (180) umfaßt.

7. Geräuschfiltervorrichtung (100) nach Anspruch 2, ferner mit einem zwischen die Audioquelle (105) und die Geräuschfiltervorrichtung geschalteten Analog-Digital-Umsetzer (110), wobei der Analog-DigitalUmsetzer dafür konfiguriert ist, ein Analogsignal in ein Digitalsignal umzusetzen.

8. Geräuschfiltervorrichtung (100) nach Anspruch 4, ferner mit einem zwischen die Geräuschfiltervorrichtung und die Ausgabeeinrichtung (170, 180) geschalteten Digital-Analog-Umsetzer (160), wobei der Digital-Analog-Umsetzer dafür konfiguriert ist, ein Digitalsignal in ein Analogsignal umzusetzen.

9. Geräuschfiltervorrichtung (100) nach Anspruch 1, wobei der mindestens eine Betriebsparameter mehrere Betriebsparameter umfaßt.

10. Geräuschfilterverfahren mit den folgenden Schritten:
Analysieren (310) eines Frequenzspektrums eines Audiosignals, um mindestens eine Geräuschquelle zu identifizieren;
Auswählen (330) mindestens eines Filters (120, 130, 140) aus mehreren Filtern auf der Basis einer mit der mindestens einen Geräuschquelle assoziierten Frequenz;
Konfigurieren (340) eines Prozessors (150) dafür, das mindestens eine Filter adaptiv zu konfigurieren;
Zuführen (350) des mindestens einen Betriebsparameters zu dem Prozessor; und
Konfigurieren (360, 370) des mindestens einen Filters auf der Basis des mindestens einen Betriebsparameters.

11. Geräuschfilterverfahren nach Anspruch 10, wobei der Schritt des Auswählens mindestens eines Filters (120, 130, 140) den Schritt des Auswählens mehrerer Filter umfaßt.

12. Geräuschfilterverfahren nach Anspruch 11, wobei der Schritt des Konfigurierens mindestens eines Filters (120, 130, 140) auf der Basis des mindestens einen Betriebsparameters den Schritt des Konfigurierens mehrerer Filter auf der Basis des mindestens einen Betriebsparameters umfaßt.

13. Geräuschfilterverfahren nach Anspruch 10, ferner mit dem Schritt des Verwendens des mindestens einen Filters (120, 130, 140) zum Filtern des Audiosignals.

14. Geräuschfilterverfahren nach Anspruch 13, ferner mit dem Schritt des Sendens des Audiosignals zu einer Ausgabeeinrichtung (170, 180) nach dem Filtern des Audiosignals.

15. Geräuschfilterverfahren nach Anspruch 13, wobei die Ausgabeeinrichtung (170, 180) einen Lautsprecher (170) umfaßt.

16. Geräuschfilterverfahren nach Anspruch 13, ferner mit dem Schritt des Sendens des Audiosignals von einer Audioquelle (105) zu dem mindestens einen Filter (120, 130, 140).

17. Geräuschfilterverfahren nach Anspruch 16, wobei die Audioquelle (105) ein Mikrofon ist.

## Revendications

1. Appareil de filtrage de bruit (100) comprenant :
une pluralité de filtres (120, 130, 140) chaque filtre ayant une fréquence centrale et une largeur de bande réglable, et configurable pour recevoir un signal audio et atténuer dans celui-ci des fréquences de signal particulières attribuées à au moins une source de bruit ; et
un processeur (150), le processeur étant couplé aux filtres et ayant une entrée (190) configurée pour recevoir au moins un paramètre opérationnel, associé à l'au moins une source de bruit, le processeur étant configuré pour activer et désactiver sélectivement les filtres appropriés conformément à une fréquence de bruit identifiée et en réponse au paramètre opérationnel, régler la fréquence centrale et la bande passante de chacun des filtres.

2. Appareil de filtrage de bruit (100) selon la revendication 1, comprenant en outre une source audio (105) couplée audit appareil de filtrage de bruit, ladite source audio étant configurée pour transmettre le signal audio audit appareil de filtrage de bruit.

3. Appareil de filtrage de bruit (100) selon la revendication 2, dans lequel ladite source audio 105 comprend un microphone.

4. Appareil de filtrage de bruit (100) selon la revendication 1 ou 2, comprenant en outre un dispositif de sortie (170, 180) couplé audit appareil de filtrage de bruit, ledit dispositif de sortie étant configuré pour transmettre un signal filtré reçu dudit appareil de filtrage de bruit.

5. Appareil de filtrage de bruit (100) selon la revendication 2, dans lequel ledit dispositif de sortie (170, 180) comprend un haut-parleur (170).

6. Appareil de filtrage de bruit (100) selon la revendication 2, dans lequel ledit dispositif de sortie (170, 180) comprend un émetteur (180).

7. Appareil de filtrage de bruit (100) selon la revendication 2, comprenant en outre un convertisseur analogique/numérique (110) couplé entre ladite source audio (105) et ledit appareil de filtrage de bruit, ledit convertisseur analogique/numérique étant configuré pour convertir un signal analogique en un signal numérique.

8. Appareil de filtrage de bruit (100) selon la revendication 4, comprenant en outre un convertisseur analogique/numérique (160) couplé entre ledit appareil de filtrage de bruit et ledit dispositif de sortie (170, 180), ledit convertisseur numérique/analogique étant configuré pour convertir un signal numérique en un signal analogique.

9. Appareil de filtrage de bruit (100) selon la revendication 1, dans lequel ledit au moins un paramètre opérationnel comprend une pluralité de paramètres opérationnels.

10. Procédé de filtrage de bruit comprenant les étapes suivantes :
analyse (310) d'un spectre de fréquences d'un signal audio afin d'identifier au moins une source de bruit ;
sélection (330) d'au moins un filtre (120, 130, 140) parmi une pluralité de filtres d'après une fréquence associée à ladite au moins une source de bruit ;
configuration (340) d'un processeur (150) pour configurer adaptativement ledit au moins un filtre ;
fourniture (350) audit processeur d'au moins un paramètre opérationnel ; et
configuration (360, 370) dudit au moins un filtre d'après au moins un paramètre opérationnel.

11. Procédé de filtrage de bruit selon la revendication 10, dans lequel ladite étape de sélection d'au moins un filtre (120, 130, 140) comprend l'étape de sélection d'une pluralité de filtres.

12. Procédé de filtrage de bruit selon la revendication 11, dans lequel ladite étape de configuration d'au moins un filtre (120, 130, 140) d'après ledit au moins un paramètre opérationnel comprend l'étape de configuration d'une pluralité de filtres d'après ledit au moins un paramètre opérationnel.

13. Procédé de filtrage de bruit selon la revendication 10, comprenant en outre l'étape d'utilisation dudit au moins un filtre (120, 130, 140) pour filtrer le signal audio.

14. Procédé de filtrage de bruit selon la revendication 13, comprenant en outre l'étape de transmission dudit signal audio audit dispositif de sortie (170, 180) après le filtrage dudit signal audio.

15. Procédé de filtrage de bruit selon la revendication 13, dans lequel ledit dispositif de sortie (170, 180) comprend un haut-parleur (170).

16. Procédé de filtrage de bruit selon la revendication 13, comprenant en outre l'étape d'émission du signal audio depuis une source audio (105) vers ledit au moins un filtre (120, 130, 140).

17. Procédé de filtrage de bruit selon la revendication 16, dans lequel ladite source audio (105) est un microphone.
